# DEMANDE DE BREVET EUROPEEN

(11) **EP 2 843 923 A2**
(43) Date de publication de la demande: **04.03.2015**
(21) Numéro de dépôt: 14180395.7
(22) Date de dépôt: 08.08.2014
(51) Int. Cl.: H04M 3/42, H04M 7/00

(54) **Dispositif et procédé d'enrichissement d'une communication**

(30) Priorité: 27.08.2013 FR 1358212
(71) Demandeur: Orange, 75015 Paris (FR)
(72) Inventeur: Moncomble, Ghislain, 22310 Plestin les Grèves (FR); Meurisse, Jean-Sebastien, 22700 Louannec (FR)

(57) **Abrégé**

L'invention concerne un procédé et un dispositif d'enrichissement d'une communication établie (20) entre au moins un terminal émetteur et un terminal récepteur. Le terminal émetteur détermine (21) au moins un contenu associé à une donnée d'identification d'un utilisateur du terminal récepteur et associé à une donnée d'identification d'un utilisateur du terminal émetteur. Puis, le contenu sélectionné est restitué (24) sur le terminal émetteur. Optionnellement, le contenu sélectionné est envoyé (25) au terminal récepteur, permettant d'enrichir la communication.

## Description

L'invention se situe dans le domaine des réseaux de télécommunication. Elle concerne un dispositif et un procédé d'enrichissement d'une communication.

Il est aujourd'hui possible d'établir entre des terminaux d'utilisateur des communications enrichies selon différents modes de communication, notamment des communications audio, vidéo, texte, tableau blanc, etc...

Le document US20100159942A1 décrit un procédé permettant d'enrichir une communication téléphonique automatiquement en recherchant des informations relatives à la localisation des terminaux. Le procédé permet d'afficher sur l'écran d'un terminal d'un premier utilisateur en communication avec un second utilisateur, des informations telles que le nom et une photo du second utilisateur, une indication de la localisation du second utilisateur, et des informations en rapport avec cette localisation telles que la météo ou des informations d'actualités.

Selon l'art antérieur, les informations d'enrichissement fournies au premier utilisateur sont des informations impersonnelles, qui ne reflètent pas l'état de la relation ou les habitudes de communication entre le premier utilisateur et le deuxième utilisateur.

Avec l'essor de nouveaux protocoles de communication tels que le protocole RCS (Rich Suite Communication) par exemple, un utilisateur peut partager des images, des vidéos, des contenus multimédia avec un interlocuteur au cours d'une communication téléphonique ou visiophonique. Pour cela, au cours de la communication, l'utilisateur doit sélectionner sur son terminal l'application de partage de fichier, parcourir la mémoire de son terminal et choisir un fichier à transmettre à son interlocuteur. L'utilisateur peut ainsi partager des données personnelles avec son interlocuteur pour enrichir la communication. Cependant, cet enrichissement nécessite l'interaction de l'utilisateur sur son terminal au cours de la communication. Pendant une communication, cette interaction utilisateur peut s'avérer malaisée en termes de manipulation du terminal. L'utilisateur peut faire des erreurs de manipulation impactant la communication, par exemple en raccrochant la communication sans le vouloir. De plus, lors de ces interactions sur le terminal, l'utilisateur n'est plus concentré sur la communication en cours avec son interlocuteur.

Un des buts de l'invention est d'apporter des améliorations par rapport à l'état de la technique.

Elle propose à cet effet un procédé d'enrichissement d'une communication établie entre au moins un terminal émetteur et un terminal récepteur. Le procédé comprend :
- une étape de détermination par le terminal émetteur, d'au moins un contenu associé à une donnée d'identification d'un utilisateur du terminal récepteur et associé à une donnée d'identification d'un utilisateur du terminal émetteur,
- une étape de restitution du contenu déterminé, sur le terminal émetteur.

Le procédé d'enrichissement selon l'invention permet ainsi d'enrichir de manière automatique une communication établie entre un terminal émetteur et un terminal récepteur à l'aide d'informations d'enrichissement communes à un utilisateur du terminal récepteur et à un utilisateur du terminal émetteur.

De telles informations d'enrichissement peuvent correspondre à des données échangées lors de communications précédentes (SMS, MMS, courriers électroniques, fichiers partagés, messages instantanés, dessins, etc...). Selon cet exemple, le terminal émetteur recherche dans un espace mémoire associé au terminal émetteur des données échangées avec l'utilisateur du terminal récepteur lors de communications précédentes. Le terminal émetteur sélectionne par exemple les échanges de données les plus récents comme informations d'enrichissement à la communication. Les contenus restitués sur le terminal émetteur en tant qu'informations d'enrichissement sont d'autant pertinents pour l'utilisateur du terminal émetteur que ces contenus correspondent à des données communes, partagées ou échangées entre l'utilisateur du terminal émetteur et l'utilisateur du terminal récepteur lors de précédentes communications.

Grâce au procédé selon l'invention, la communication côté terminal émetteur est enrichie automatiquement.

Selon ce procédé, les étapes du procédé d'enrichissement peuvent être mises en oeuvre au cours d'une communication établie afin d'enrichir une communication en cours. En variante, le procédé d'enrichissement peut aussi être mis en oeuvre avant l'établissement de la communication, par exemple lorsque l'utilisateur du terminal émetteur compose le numéro du terminal récepteur afin d'établir une communication.

Les différents modes ou caractéristiques de réalisation mentionnés ci-après peuvent être ajoutés indépendamment ou en combinaison les uns avec les autres, aux étapes du procédé d'enrichissement défini ci-dessus.

Selon un mode particulier de réalisation de l'invention, le procédé d'enrichissement comprend une étape d'envoi au terminal récepteur d'au moins une donnée représentative dudit contenu déterminé, de sorte que le terminal récepteur restitue ledit contenu au cours de la communication établie.

Selon ce mode particulier de réalisation de l'invention, la communication est enrichie automatiquement également du côté terminal récepteur à l'aide d'informations d'enrichissement pertinentes pour la communication entre les utilisateurs du terminal émetteur et du terminal récepteur. Dans ce mode particulier de réalisation de l'invention, la communication est enrichie sur le terminal émetteur et sur le terminal récepteur avec les mêmes informations d'enrichissements. En variante, des informations d'enrichissement fournies par le terminal émetteur peuvent correspondre à des contenus en ligne partagés par l'utilisateur du terminal émetteur avec un groupe d'utilisateurs, dont l'utilisateur du terminal récepteur.

Ainsi, selon ce mode particulier de réalisation de l'invention, pour partager des données personnelles, l'utilisateur du terminal émetteur n'a pas besoin de manipuler son terminal pour retrouver un contenu à partager avec l'utilisateur du terminal récepteur.

Selon ce mode particulier de réalisation de l'invention, la donnée représentative dudit contenu sélectionné peut être transmise au cours de la communication ou lors de l'établissement de la communication. Dans cette dernière variante, le contenu sélectionné est ainsi restitué sur le terminal récepteur dès que la communication avec le terminal émetteur est établie.

Selon un autre mode particulier de réalisation de l'invention, la donnée représentative du contenu envoyée au terminal récepteur est un paramètre permettant au terminal récepteur d'identifier et d'accéder audit contenu stocké dans un espace mémoire associé au terminal récepteur ou dans un espace mémoire d'un serveur d'un réseau de communication auquel est connecté le terminal récepteur.

Ce mode particulier de réalisation de l'invention permet l'enrichissement de la communication en cours sans nécessiter de ressources importantes pour la transmission des informations d'enrichissement. Par exemple, si le terminal émetteur a sélectionné en tant qu'informations d'enrichissement, un groupe d'images stockées sur un site de partage en ligne, l'information d'enrichissement est transmise sous la forme d'un lien d'accès au groupe d'images, par exemple une URL, accompagnée éventuellement de données d'accès tel qu'un mot de passe. Selon un autre exemple, lorsque le procédé sélectionne automatiquement en tant qu'informations d'enrichissement, des données échangées lors de communications précédentes, les informations d'enrichissement sont transmises sous la forme d'un paramètre indiquant le type des données (SMS, MMS, courriels, etc...) et des données d'horodatage permettant au terminal récepteur d'identifier les données de communications correspondantes.

Ce mode particulier de réalisation de l'invention permet d'optimiser la bande passante de transmission en ne transmettant pas directement le contenu mais en transmettant seulement une donnée permettant au terminal récepteur de retrouver le contenu dans une mémoire à laquelle le terminal récepteur a accès.

Ce mode particulier de réalisation de l'invention est également avantageux lorsque le contenu d'enrichissement est stocké à la fois dans une mémoire associé au terminal émetteur et dans une mémoire associée au terminal récepteur. Dans ce mode particulier de réalisation de l'invention, le contenu n'a pas besoin d'être retransmis entre les deux terminaux lors de la communication.

Selon un autre mode particulier de réalisation de l'invention, lors de l'étape de détermination d'au moins un contenu, un contenu est sélectionné pour être restitué lors de l'étape de restitution, si sa date de réception par le terminal émetteur ou si sa date d'envoi par le terminal émetteur est postérieure à une date prédéterminée.

Dans ce mode particulier de réalisation de l'invention, le procédé d'enrichissement permet ainsi de sélectionner des contenus que le terminal émetteur et le terminal récepteur ont récemment échangés.

La date prédéterminée peut être définie en fonction de l'analyse de l'historique des échanges entre les deux interlocuteurs. Par exemple, la date prédéterminée est une date proche de la date actuelle si les échanges sont faits avec une fréquence élevée (par exemple tous les jours), ou la date prédéterminée est une date plus éloignée de la date actuelle si les échanges sont faits avec une fréquence faible (par exemple une fois par mois). La date prédéterminée peut ainsi variée en fonction de la fréquence des échanges entre les interlocuteurs.

Ce mode de réalisation permet également, lorsque plusieurs contenus pertinents ont été sélectionnés, de limiter leur nombre en filtrant les contenus antérieurs à la date prédéterminée.

Selon un autre mode particulier de réalisation de l'invention, lors de l'étape de détermination d'au moins un contenu, un contenu est sélectionné pour être restitué lors de l'étape de restitution si une mise à jour dudit contenu ou d'un ensemble de contenus auquel appartient ledit contenu a été effectuée depuis une précédente communication établie entre le terminal émetteur et le terminal récepteur.

Selon ce mode particulier de réalisation de l'invention, le terminal émetteur sélectionne les contenus en relation avec l'utilisateur du terminal récepteur et avec l'utilisateur du terminal émetteur qui ont récemment été mis à jour. Ainsi, les informations d'enrichissement de la communication sont d'autant plus pertinentes pour la communication qu'elles correspondent à des contenus nouveaux ou mis à jour de l'utilisateur du terminal émetteur et partagés avec l'utilisateur du terminal récepteur.

Selon un autre mode particulier de réalisation de l'invention, préalablement à l'étape de détermination, le procédé comprend une étape de réception par le terminal émetteur d'une donnée représentative d'un contenu, la donnée étant envoyée par le terminal récepteur. Selon ce mode particulier de réalisation de l'invention, l'étape de détermination comprend une étape de recherche dans un espace mémoire associé au terminal émetteur ou dans un espace mémoire d'un serveur d'un réseau de communication auquel est connecté le terminal émetteur, dudit contenu à partir de la donnée reçue.

Selon ce mode particulier de réalisation de l'invention, le contenu associé à une donnée d'identification d'un utilisateur du terminal récepteur et associé à une donnée d'identification d'un utilisateur du terminal émetteur est déterminé à partir d'une donnée représentative de ce contenu envoyée par le terminal récepteur. La donnée représentative permet au terminal émetteur d'identifier et d'accéder audit contenu.

Ce mode particulier de réalisation de l'invention est avantageux par exemple lorsque l'utilisateur du terminal récepteur a sélectionné un contenu pour enrichir la communication ou lorsque le procédé d'enrichissement d'une communication selon l'un quelconque des modes décrits précédemment est mis en oeuvre par le terminal récepteur.

Ce mode particulier de réalisation de l'invention permet d'optimiser la bande passante de transmission en ne transmettant pas directement le contenu mais en transmettant seulement une donnée permettant au terminal émetteur de retrouver le contenu dans une mémoire à laquelle le terminal émetteur a accès.

Ce mode particulier de réalisation de l'invention est également avantageux lorsque le contenu d'enrichissement est stocké à la fois dans une mémoire associé au terminal émetteur et dans une mémoire associée au terminal récepteur. Dans ce mode particulier de réalisation de l'invention, le contenu n'a pas besoin d'être retransmis entre les deux terminaux lors de la communication. Selon un autre mode particulier de réalisation de l'invention, la donnée d'identification de l'utilisateur du terminal récepteur correspond à une donnée associée à un contact enregistré dans un carnet d'adresses associé au terminal émetteur.

La donnée d'identification correspond par exemple au numéro de téléphone du terminal récepteur, une adresse de courrier électronique de l'utilisateur du terminal récepteur, une adresse de contact SIP URI (pour Session Initiation Protocol Uniform Ressource Identifier en anglais) relative à l'utilisateur du terminal récepteur.

Ainsi, dans ce mode particulier de réalisation de l'invention, la donnée d'identification permettant de déterminer au moins un contenu pour enrichir la communication en cours n'est pas forcément la coordonnée relative au terminal récepteur et ayant servie pour établir la communication en cours. Selon ce mode particulier de réalisation de l'invention, des informations d'enrichissement ou un type d'informations d'enrichissement sont associés aux contacts d'un carnet d'adresses de l'utilisateur du terminal émetteur.

A chaque contact de son carnet d'adresses, l'utilisateur émetteur peut ainsi associer des contenus à partager ou des types de contenus. Ce mode particulier de réalisation de l'invention facilite la recherche de contenus pour enrichir la communication et permet de sélectionner des contenus pertinents à partager avec l'utilisateur du terminal récepteur.

Selon un autre mode particulier de réalisation de l'invention, l'étape de détermination est mise en oeuvre par une étape de recherche d'un contenu dans un espace mémoire associé au terminal émetteur stockant des données de précédentes communications entre l'utilisateur du terminal émetteur et l'utilisateur du terminal récepteur.

Selon ce mode particulier de réalisation de l'invention, un contenu est recherché dans un historique de communications, par exemple un journal d'appels ou une boîte de réception ou d'émission dédiée à un type de messages (courriels, SMS, MMS, messages instantanés, ...). Ce mode particulier de réalisation permet de déterminer plus facilement des contenus pertinents pour enrichir la communication. De plus, l'étape de recherche est plus rapide car elle est faite dans un espace mémoire ciblé.

L'invention concerne aussi un dispositif d'enrichissement d'une communication établie entre au moins un terminal émetteur et un terminal récepteur. Le dispositif comprend :
- des moyens de détermination d'au moins un contenu associé à une donnée d'identification d'un utilisateur du terminal récepteur et associé à une donnée d'identification d'un utilisateur du terminal émetteur,
- des moyens de restitution du contenu déterminé sur le terminal émetteur.

Les différents modes ou caractéristiques de réalisation mentionnés ci-après peuvent être ajoutés indépendamment ou en combinaison les uns avec les autres, aux caractéristiques du dispositif d'enrichissement défini ci-dessus.

Selon un mode particulier de réalisation de l'invention, le dispositif d'enrichissement comprend des moyens d'envoi au terminal récepteur d'au moins une donnée représentative dudit contenu déterminé, de sorte que le terminal récepteur restitue ledit contenu au cours de la communication établie.

Selon un autre mode particulier de réalisation de l'invention, le dispositif d'enrichissement comprend des moyens de réception d'une donnée représentative d'un contenu envoyée par le terminal récepteur, et des moyens de recherche dans un espace mémoire associé au terminal émetteur ou dans un espace mémoire d'un serveur d'un réseau de communication auquel est connecté le terminal émetteur, dudit contenu à partir de la donnée reçue.

L'invention concerne aussi un terminal comprenant un dispositif d'enrichissement selon l'un quelconque des modes particuliers de réalisation mentionnés ci-dessus.

L'invention concerne aussi un message d'enrichissement d'une communication établie entre au moins un terminal émetteur et un terminal récepteur. Le message comprend au moins une donnée représentative d'un contenu, ledit contenu étant associé à une donnée d'identification d'un utilisateur du terminal récepteur et à une donnée d'identification d'un utilisateur du terminal émetteur, ladite donnée représentative d'un contenu étant envoyée sous la forme d'un paramètre permettant au terminal récepteur d'identifier et d'accéder audit contenu stocké dans un espace mémoire associé au terminal émetteur ou dans un espace mémoire d'un serveur d'un réseau de communication auquel est connecté le terminal émetteur.

Dans un mode particulier de réalisation, les différentes étapes du procédé d'enrichissement d'une communication sont mises en oeuvre par des instructions de programmes d'ordinateurs.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes du procédé d'enrichissement d'une communication qui vient d'être décrit.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé d'enrichissement d'une communication en question.

Les avantages du dispositif d'enrichissement, du terminal, du message d'enrichissement et du programme d'ordinateur sont identiques à ceux présentés en relation avec le procédé d'enrichissement selon l'un quelconque des modes particuliers de réalisation mentionnés ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en oeuvre de l'invention selon un mode particulier de réalisation,
- la figure 2 illustre des étapes du procédé d'enrichissement d'une communication selon un mode particulier de réalisation de l'invention,
- les figures 3A et 3B illustrent schématiquement une donnée représentative d'une information d'enrichissement selon un mode particulier de réalisation de l'invention,
- la figure 4 illustre des étapes du procédé d'enrichissement selon un autre mode particulier de réalisation de l'invention,
- la figure 5 illustre un dispositif mettant en oeuvre le procédé d'enrichissement d'une communication selon un mode particulier de réalisation de l'invention.

### Description d'un mode particulier de réalisation de l'invention

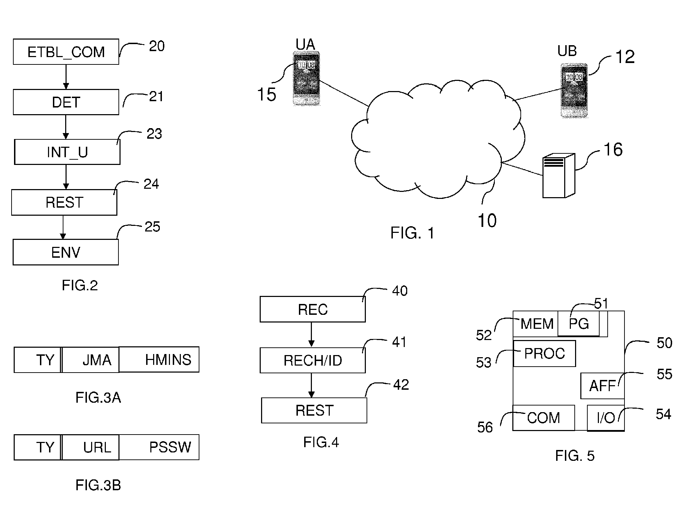

La figure 1 illustre un environnement de mise en oeuvre de l'invention selon un mode particulier de réalisation. L'environnement comprend un réseau de communication 10 auquel sont connectés des terminaux 12 et 15 et un serveur de stockage de données 16.

Le réseau de communication 10 est par exemple un réseau de communications mobile de type GSM, EDGE, 3G, 3G+, 4G, mis en oeuvre par une architecture de type RCS.

Les terminaux 12 et 15 peuvent être tout type de terminaux permettant d'établir une communication téléphonique ou visiophonique, tels qu'un téléphone portable, un smartphone (téléphone intelligent en anglais), une tablette, une télévision connectée à un réseau de télécommunications, un ordinateur personnel sur lequel une application de téléphonie, aussi appelé softphone, est installée.

Les terminaux 12 et 15 sont connectés au réseau de communication 10 et peuvent émettre et recevoir tout type de communications, via le réseau de communication 10. Notamment, les terminaux 12 et 15 peuvent établir des communications enrichies par des informations d'enrichissement reçues par exemple selon le protocole de communication RCS.

Les terminaux 12 et 15 appartiennent respectivement à un utilisateur UB et UA. Les utilisateurs UB et UA disposent de données d'identifications sur le réseau de communication 10 qui permettent à d'autres utilisateurs d'établir des communications avec les utilisateurs UA et UB. De telles données d'identification correspondent par exemple à une identité publique de type IMPU (pour IP Multimedia Public Identity en anglais), un numéro de téléphone, une adresse de contact URI, une adresse de courrier électronique, etc...

Le serveur de stockage de données 16 est un serveur de stockage de contenus en ligne, permettant par exemple à un utilisateur UA de stocker des contenus personnels dans le réseau. L'utilisateur UA peut alors accéder à ses contenus personnels stockés sur le serveur de stockage de données 16, via une URL (pour Uniform Ressource Locator) et le cas échéant des données d'authentification. Le serveur de stockage de données 16 correspond par exemple à un serveur d'un opérateur fournissant une application de partage de contenus en ligne ou de réseau social. Le procédé d'enrichissement d'une communication peut être mis en oeuvre selon un mode particulier de réalisation de l'invention, par le terminal 12 et/ou le terminal 15 au cours d'une communication établie entre le terminal 12 et le terminal 15, afin d'enrichir la communication en cours.

La figure 2 illustre des étapes du procédé d'enrichissement d'une communication selon un mode particulier de réalisation de l'invention. Le procédé d'enrichissement est par exemple mis en oeuvre par le terminal 15.

Lors d'une étape 20, une communication est établie entre le terminal 15 et le terminal 12, de façon connue par exemple selon le protocole SIP (pour Session Initiation Protocol en anglais). La communication établie peut être une communication téléphonique, visiophonique ou tout autre type de communication (messagerie instantanée, conférence, tableau blanc, etc).

Lors d'une étape 21, le terminal 15 détermine au moins un contenu associé à une donnée d'identification de l'utilisateur UB du terminal 12 et associé à une donnée d'identification de l'utilisateur UA du terminal 15.

Une donnée d'identification de l'utilisateur UB correspond par exemple au numéro de téléphone permettant de joindre l'utilisateur UB sur son terminal 12.

En variante, la donnée d'identification de l'utilisateur UB est une donnée de l'utilisateur UB fournie par le terminal 12 en paramètre d'un message SIP d'établissement de session, telle qu'une adresse de contact SIP URI par exemple.

En variante, la donnée d'identification de l'utilisateur UB est une donnée stockée dans un carnet d'adresses de l'utilisateur UA et associé au terminal 15. Dans cette variante, la donnée est associée au contact UB dans le carnet d'adresses de l'utilisateur UA. La donnée correspond par exemple à une adresse de courrier électronique, à un identifiant d'un site Internet de réseau social ou de partage de données, ou à un numéro de téléphone de l'utilisateur UB.

La donnée d'identification de l'utilisateur UA correspond par exemple au numéro de téléphone permettant de joindre l'utilisateur UA sur son terminal 15, à une adresse de courrier électronique de l'utilisateur UA, à une adresse de contact SIP URI du terminal 15, etc...

A partir de la donnée d'identification de l'utilisateur UB, le terminal 15 recherche dans la mémoire du terminal 15 des fichiers contenant la donnée d'identification de l'utilisateur UB. Le terminal 15 examine notamment les fichiers contenant des échanges de données de communications précédentes entre le terminal 12 et le terminal 15 et les fichiers attachés à ces échanges de communications. Le terminal 15 examine ainsi tout type de fichiers : courriers électroniques, SMS, MMS, documents de type bureautique (documents de traitement de texte, de calculs de données, ...), images, vidéos.

Par exemple, dans le cas où le terminal 15 a identifié des courriers électroniques envoyés par l'utilisateur UB à l'utilisateur UA, la donnée d'identification de l'utilisateur UB est alors présente dans le champ « émetteur » du courrier électronique et la donnée d'identification de l'utilisateur UA est alors présente dans le champ «destinataire » du courrier électronique. Selon un autre exemple, dans le cas où le terminal 15 a identifié des courriers électroniques envoyés par l'utilisateur UA à l'utilisateur UB, la donnée d'identification de l'utilisateur UB est alors présente dans le champ « destinataire » du courrier électronique et la donnée d'identification de l'utilisateur UA est alors présente dans le champ « émetteur » du courrier électronique.

En variante, la donnée d'identification de l'utilisateur UB peut également être présente dans des métadonnées associées à des contenus de type images, vidéos stockés dans une mémoire associée au terminal 15 ou sur un serveur de stockage de données 16. Les métadonnées peuvent par exemple correspondre à des données de marquage identifiant l'utilisateur UB dans le contenu ou à des données indiquant que le contenu a été partagé avec l'utilisateur UB.

Une donnée d'identification du créateur ou du propriétaire du contenu ou du terminal qui a été utilisé pour générer le contenu, par exemple le terminal 15, est également associée au contenu. Cette donnée correspond ainsi à une donnée d'identification de l'utilisateur UA.

Au cours de l'étape 21, le terminal 15 sélectionne au moins un contenu parmi le groupe de contenus précédemment identifiés. Par exemple, le terminal 15 sélectionne un contenu en fonction de sa date de réception, d'envoi ou de création.

Selon un mode particulier de réalisation de l'invention, le terminal 15 dispose d'un historique des communications entre les utilisateurs UA et UB. L'historique des communications entre les utilisateurs UA et UB contient notamment les données d'horodatage de ces communications et le type de communication (courriers électroniques, appels téléphoniques ou visiophoniques, SMS, MMS, tableau blanc, notifications, etc). L'historique de communications correspond par exemple à un journal d'appels émis ou reçus, à une boîte de réception ou d'émission de messages, de type courriels, SMS, MMS, messages instantanés, etc.

Les communications répertoriées dans l'historique de communication ne sont pas limitées à celles qui ont été émises ou reçues à partir du terminal 15 de l'utilisateur UA. Les communications peuvent avoir été émises ou reçues depuis un autre terminal de l'utilisateur UA et les données relatives à ces communications ont été sauvegardées dans l'historique.

L'historique des communications entre les utilisateurs UA et UB peut être stocké localement sur le terminal 15 ou sur un serveur (non représenté) dans le réseau de communications 10.

Selon un mode particulier de réalisation de l'invention, pour un contenu relatif à des échanges de communication entre les utilisateurs UA et UB, le terminal 15 sélectionne un contenu si sa date d'envoi ou de réception est postérieure à une date prédéterminée. Par exemple, le terminal 15 sélectionne un contenu si sa date d'envoi ou de réception est comprise dans les sept jours précédant la date de la communication en cours.

Selon un autre mode particulier de réalisation de l'invention, le terminal 15 sélectionne un contenu si une mise à jour dudit contenu ou d'un ensemble auquel appartient ledit contenu a été effectuée depuis une précédente communication établie entre le terminal 12 et le terminal 15. Par exemple, lorsque le groupe de contenus déterminé à l'étape 21 comprend des contenus stockés sur le serveur de stockage de données 16 de la figure 1 et partagés avec l'utilisateur UB, le terminal 15 sélectionne les contenus qui ont été partagés ou mis à jour récemment.

Lors de l'étape 21, le terminal 15 détermine ainsi au un moins contenu associé à une donnée d'identification de l'utilisateur UB et associé à une donnée d'identification de l'utilisateur UA.

Selon un mode particulier de réalisation de l'invention, lors d'une étape 23, le terminal 15 présente à l'utilisateur UA au cours de la communication, une liste des contenus déterminés lors de l'étape 21. La liste contient notamment une information représentant le contenu telle que le type de contenu, la date d'envoi, de réception ou de modification du contenu, l'objet du contenu.

Selon un mode particulier de réalisation de l'invention, les contenus sélectionnés sont présentés selon un ordre chronologique en fonction de leur donnée d'horodatage, par exemple du plus récent au plus ancien.

Au cours de l'étape 23, l'utilisateur UA valide les contenus de la liste que l'utilisateur UA souhaite transmettre à l'utilisateur UB, par une interaction-utilisateur sur le terminal 15.

L'étape 23 est optionnelle, le terminal 15 peut déterminer automatiquement le contenu destiné à enrichir la communication établie entre le terminal 15 et le terminal 12 en sélectionnant par exemple parmi la liste des contenus déterminés lors de l'étape 21, le contenu le plus récent.

Lors d'une étape 24, le terminal 15 restitue sur un écran un contenu déterminé lors de l'étape 21, par exemple le premier contenu de la liste ou le premier contenu validé par l'utilisateur UA lors de l'étape 23.

Selon un mode particulier de réalisation de l'invention, lors d'une étape 25, le terminal 15 envoie au terminal 12 au moins une donnée représentative du contenu sélectionné à l'étape 21 ou validé par l'utilisateur UA à l'étape 23. La donnée représentative du contenu est envoyée au cours de la communication par exemple selon le protocole RCS. Le terminal 12 peut ainsi restituer sur son terminal le contenu envoyé par le terminal 15. Ce mode particulier de réalisation de l'invention permet ainsi d'enrichir la communication de manière symétrique à l'aide des mêmes contenus pour les deux utilisateurs UA et UB.

L'invention ne se limite pas au cas de deux terminaux en communication. Le procédé d'enrichissement d'une communication tel que décrit en relation avec la figure 2 s'étend aux cas de communication entre plus de deux terminaux.

Selon un mode particulier de réalisation de l'invention, la donnée représentative du contenu est envoyée au terminal 12 sous la forme d'un paramètre permettant au terminal 12 d'identifier le contenu et d'accéder au contenu identifié. Dans ce mode particulier de réalisation de l'invention, le paramètre est envoyé par exemple dans un message de communication SIP comprenant un champ propriétaire tel qu'illustré par les figures 3A et 3B.

Selon un premier exemple, le contenu envoyé par le terminal 15 au terminal 12 est un contenu relatif à une communication précédemment établie entre le terminal 15 et le terminal 12.

Selon ce premier exemple, le paramètre permettant d'identifier le contenu est envoyé sous la forme de données d'horodatage telle qu'illustrée en figure 3A. Sur la figure 3A, le paramètre comprend un champ TY indiquant le type de contenu à identifier, par exemple un courrier électronique émis par l'utilisateur UA, un champ JMA indiquant les données d'horodatage d'émission du contenu et un champ HMINS indiquant un identifiant du contenu, par exemple un identifiant du courrier électronique.

Selon un deuxième exemple, le contenu envoyé par le terminal 15 au terminal 12 est un contenu stocké sur le serveur de stockage de données 16 et accessible via une URL, par exemple une image. Selon cet exemple, le paramètre permettant d'identifier le contenu est envoyé sous la forme illustrée en figure 3B. Sur la figure 3B, le paramètre comprend un champ TY indiquant le type de contenu à identifier, par exemple une image stockée dans le réseau, un champ URL indiquant l'adresse électronique à laquelle le contenu est accessible et pointant sur un espace mémoire du serveur de stockage de données 16, et éventuellement un champ PSSW portant des données d'authentification permettant au terminal 12 de s'authentifier et d'accéder au contenu stocké.

Dans les modes de réalisation décrit en relation avec les figures 3A et 3B, le champ TY permet également d'identifier une application permettant d'accéder au contenu et de renseigner sur l'emplacement mémoire dans lequel le contenu est stocké. Par exemple pour un contenu de type SMS, le contenu est stocké dans un espace mémoire du terminal 15 dédié au stockage de la boîte de réception ou d'émission des SMS.

La figure 4 illustre des étapes du procédé d'enrichissement selon un mode particulier de réalisation de l'invention. Le procédé d'enrichissement est par exemple mis en oeuvre par le terminal 12 au cours d'une communication établie avec le terminal 15.

Lors d'une étape 40, le terminal 12 reçoit une donnée représentative d'un contenu envoyée par le terminal 15. Par exemple, lorsque le terminal 15 met en oeuvre le procédé d'enrichissement décrit en relation avec la figure 2, la donnée représentative du contenu correspond à la donnée envoyée par le terminal 15 lors de l'étape 25 de la figure 2. Selon un autre exemple, la donnée représentative reçue par le terminal 12 correspond à une donnée représentative d'un contenu sélectionné par l'utilisateur UA du terminal 15 au cours de la communication.

Selon l'un quelconque des exemples précédemment décrits, la donnée est par exemple envoyée sous la forme d'un message comprenant notamment les champs décrits en relation avec la figure 3A ou la figure 3B.

Lors d'une étape 41, le terminal 12 extrait du message reçu à l'étape 40, les paramètres permettant d'identifier un contenu dans un espace mémoire associé au terminal 12 ou dans un espace mémoire du serveur de stockage de données 16 de la figure 1.

Selon un premier exemple, la donnée représentative du contenu est envoyée sous la forme décrite en relation avec la figure 3A. Au cours de l'étape 41, le terminal 12 recherche un contenu du type indiqué par le champ TY et portant les données d'horodatage indiquées dans le champ JMA et l'identifiant HMINS. En fonction du type de contenu indiqué par le champ TY, par exemple un courrier électronique émis par le terminal 15 de l'utilisateur UA, le terminal 12 identifie un espace mémoire dans lequel rechercher le contenu portant les données d'horodatage JMA. Si le terminal 12 identifie plusieurs contenus de même type portant les mêmes données d'horodatage, le terminal 12 identifie le contenu comme celui portant l'identifiant HMINS.

Selon un deuxième exemple, la donnée représentative du contenu est envoyée sous la forme décrite en relation avec la figure 3B. Au cours de l'étape 41, le terminal 12 accède au contenu via l'adresse électronique URL pointant sur un espace mémoire du serveur de stockage de données 16 de la figure 1. Si des données d'authentification sont présentes, le terminal 12 s'authentifie grâce à aux données d'authentification PSSW sur le serveur de stockage de données 16. Le terminal 12 charge alors le contenu dans une mémoire.

Au cours de l'étape 41 de recherche et d'identification d'un contenu, le terminal 12 détermine, à partir de la donnée reçue à l'étape 40, un contenu associé à une donnée d'identification de l'utilisateur UB et associé à une donnée d'identification de l'utilisateur UA.

Lors d'une étape 42, le terminal 12 restitue le contenu identifié ou chargé en mémoire sur l'écran du terminal 12. La restitution du contenu est par exemple mise en oeuvre par l'application de communication utilisée pour la communication en cours si l'application de communication est apte à restituer le contenu identifié. La restitution du contenu peut aussi être mise en oeuvre par une application dédiée au contenu, par exemple l'application ayant servi à l'échange du contenu lors d'une communication précédente.

L'utilisateur UB peut ainsi avoir accès au contenu au cours de la communication avec l'utilisateur UA.

La figure 5 illustre un dispositif permettant de mettre en oeuvre le procédé d'enrichissement d'une communication selon un mode particulier de réalisation de l'invention.

Le dispositif 50 comprend un module de stockage 52, par exemple une mémoire (MEM), une unité de traitement 53, équipée par exemple d'un microprocesseur (PROC), et pilotée par le programme d'ordinateur (PG) 51 mettant en oeuvre le procédé d'enrichissement d'une communication tel que décrit en relation avec la figure 2 ou la figure 3. A l'initialisation, les instructions de code du programme d'ordinateur 51 sont par exemple chargées en mémoire (MEM) avant d'être exécutées par le processeur (PROC) de l'unité de traitement 53. Le processeur de l'unité de traitement 53 met en oeuvre les étapes du procédé d'enrichissement d'une communication établie entre au moins un terminal émetteur et un terminal récepteur, et notamment une étape de détermination par le terminal émetteur, d'au moins un contenu associé à une donnée d'identification d'un utilisateur du terminal récepteur et associé à une donnée d'identification d'un utilisateur du terminal émetteur, et une étape de restitution du contenu déterminé sur le terminal émetteur, selon les instructions du programme d'ordinateur 51.

Le module de stockage 52 permet également de stocker sur le dispositif 50 des contenus associés à une donnée d'identification de l'utilisateur du terminal récepteur et associés à une donnée d'identification de l'utilisateur du terminal émetteur.

Selon un mode particulier de réalisation de l'invention, le module de stockage 52 contient les données associées aux contacts d'un carnet d'adresses associé au terminal émetteur ou associé à l'utilisateur du terminal émetteur.

Le dispositif 50 comporte aussi des moyens de communication 56. Les moyens de communication sont par exemple mis en oeuvre par un module de communication (COM). Le module de communication permet notamment au dispositif 50 d'établir des communications via le réseau de communication 10 de la figure 1.

Selon un mode particulier de réalisation de l'invention, le module de communication (COM) permet d'envoyer au terminal récepteur une donnée représentative d'un contenu déterminé par l'unité de traitement de données (53).

Selon un mode particulier de réalisation de l'invention, le module de communication (COM) permet au dispositif 50 de recevoir une donnée représentative d'un contenu d'enrichissement d'une communication en cours avec un terminal récepteur.

Selon un mode particulier de réalisation de l'invention, le dispositif 50 comprend également des moyens d'interaction utilisateur 54 (I/O) permettant à l'utilisateur d'interagir avec le dispositif 50, par exemple pour valider un contenu déterminé. Les moyens d'interaction utilisateur 54 sont par exemple mis en oeuvre au moyen d'une interface utilisateur. Cette interface utilisateur peut correspondre à un clavier, une souris, ou un écran tactile.

Le dispositif 50 comprend des moyens de restitution 55 permettant notamment de restituer les informations d'enrichissement de la communication, par exemple un contenu identifié lors de l'étape de détermination. Les moyens de restitution sont par exemple mis oeuvre par un module d'affichage (AFF), tel qu'un écran.

Le dispositif 50 est compris dans un terminal, tel que par exemple le terminal 15 ou le terminal 12 de la figure 1. Plus généralement, le dispositif 50 est compris dans un terminal tel que par exemple un ordinateur personnel, fixe ou mobile, un téléphone mobile, une tablette, une télévision connectée, un smartphone, etc...

## Revendications

1. Procédé d'enrichissement d'une communication établie (20) entre au moins un terminal émetteur (15) et un terminal récepteur (12), le procédé est **caractérisé en ce qu'**il comprend :
- une étape de détermination (21) par le terminal émetteur, d'au moins un contenu associé à une donnée d'identification d'un utilisateur du terminal récepteur et associé à une donnée d'identification d'un utilisateur du terminal émetteur,
- une étape de restitution (24) du contenu déterminé sur le terminal émetteur.

2. Procédé d'enrichissement d'une communication selon la revendication 1, **caractérisé en ce qu'**il comprend une étape d'envoi (25) au terminal récepteur d'au moins une donnée représentative dudit contenu déterminé, de sorte que le terminal récepteur restitue ledit contenu au cours de la communication établie.

3. Procédé d'enrichissement d'une communication selon la revendication 2, **caractérisé en ce que** la donnée représentative du contenu envoyée au terminal récepteur est un paramètre permettant au terminal récepteur d'identifier et d'accéder audit contenu stocké dans un espace mémoire associé au terminal récepteur ou dans un espace mémoire d'un serveur d'un réseau de communication auquel est connecté le terminal récepteur.

4. Procédé d'enrichissement d'une communication selon l'une quelconque des revendications 1 à 3, **caractérisé en ce que** lors de l'étape de détermination d'au moins un contenu, un contenu est sélectionné pour être restitué lors de l'étape de restitution, si sa date de réception par le terminal émetteur ou d'envoi par le terminal émetteur est postérieure à une date prédéterminée.

5. Procédé d'enrichissement d'une communication selon l'une quelconque des revendications 1 à 4, **caractérisé en ce que** lors de l'étape de détermination d'au moins un contenu, un contenu est sélectionné pour être restitué lors de l'étape de restitution si une mise à jour dudit contenu ou d'un ensemble de contenus auquel appartient ledit contenu a été effectuée depuis une précédente communication établie entre le terminal émetteur et le terminal récepteur.

6. Procédé d'enrichissement d'une communication selon l'une quelconque des revendications 1 à 5 **caractérisé en ce que**, préalablement à l'étape de détermination, le procédé comprend une étape de réception par le terminal émetteur d'une donnée représentative d'un contenu envoyée par le terminal récepteur, et **en ce que** l'étape de détermination comprend une étape de recherche dans un espace mémoire associé au terminal émetteur ou dans un espace mémoire d'un serveur d'un réseau de communication auquel est connecté le terminal émetteur, dudit contenu à partir de la donnée reçue.

7. Procédé d'enrichissement d'une communication selon l'une quelconque des revendications 1 à 6, **caractérisé en ce que** la donnée d'identification de l'utilisateur du terminal récepteur correspond à une donnée associée à un contact enregistré dans un carnet d'adresses associé au terminal émetteur.

8. Procédé d'enrichissement d'une communication selon l'une quelconque des revendications 1 à 7, **caractérisé en ce que** l'étape de détermination est mise en oeuvre par une étape de recherche d'un contenu dans un espace mémoire associé au terminal émetteur stockant des données de précédentes communications entre l'utilisateur du terminal émetteur et l'utilisateur du terminal récepteur.

9. Dispositif d'enrichissement d'une communication établie entre au moins un terminal émetteur et un terminal récepteur, le dispositif est **caractérisé en ce qu'**il comprend :
- des moyens de détermination d'au moins un contenu associé à une donnée d'identification d'un utilisateur du terminal récepteur et associé à une donnée d'identification d'un utilisateur du terminal émetteur,
- des moyens de restitution du contenu déterminé sur le terminal émetteur.

10. Dispositif d'enrichissement d'une communication selon la revendication 9 **caractérisé en ce qu'**il comprend des moyens d'envoi au terminal récepteur d'au moins une donnée représentative dudit contenu déterminé, de sorte que le terminal récepteur restitue ledit contenu au cours de la communication établie.

11. Dispositif d'enrichissement d'une communication selon l'une quelconque des revendications 9 ou 10 **caractérisé en ce qu'**il comprend :
- des moyens de réception d'une donnée représentative d'un contenu envoyée par le terminal récepteur,
- des moyens de recherche dans un espace mémoire associé au terminal émetteur ou dans un espace mémoire d'un serveur d'un réseau de communication auquel est connecté le terminal émetteur, dudit contenu à partir de la donnée reçue.

12. Terminal comprenant un dispositif selon l'une quelconque des revendications 9 à 11.

13. Message d'enrichissement d'une communication établie entre au moins un terminal émetteur et un terminal récepteur, **caractérisé en ce qu'**il comprend au moins une donnée représentative d'un contenu, ledit contenu étant associé à une donnée d'identification d'un utilisateur du terminal récepteur et à une donnée d'identification d'un utilisateur du terminal émetteur, ladite donnée représentative d'un contenu étant envoyée sous la forme d'un paramètre permettant au terminal récepteur d'identifier et d'accéder audit contenu stocké dans un espace mémoire associé au terminal émetteur ou dans un espace mémoire d'un serveur d'un réseau de communication auquel est connecté le terminal émetteur.

14. Programme d'ordinateur comportant des instructions de code de programme pour l'exécution des étapes du procédé d'enrichissement d'une communication selon l'une quelconque des revendications 1 à 8 lorsque le programme est exécuté par un processeur.
